# EUROPÄISCHE PATENTSCHRIFT

(11) **EP 2 912 362 B1**
(45) Veröffentlichungstag und Bekanntmachung des Hinweises auf die Patenterteilung: **27.12.2017**
(21) Anmeldenummer: 13824478.5
(22) Anmeldetag: 28.10.2013
(51) Int. Cl.: F16M 11/14, F16M 13/02

(54) **HALTERUNG UND SET MIT EINER HALTERUNG**
MOUNT, AND SET COMPRISING A MOUNT
FIXATION ET ENSEMBLE COMPRENANT UNE FIXATION

(30) Priorität: 26.10.2012 DE 102012021009; 05.04.2013 DE 102013005766; 08.04.2013 US 201361809517 P
(43) Veröffentlichungstag der Anmeldung: 02.09.2015
(73) Patentinhaber: Tormaxx GmbH, 41199 Mönchengladbach (DE)
(72) Erfinder: KOCH, Hubert, 41199 Mönchengladbach (DE)
(74) Vertreter: Castell, Klaus
(86) Internationale Anmeldenummer: PCT/DE2013/000632
(87) Internationale Veröffentlichungsnummer: WO 2014/063678

(56) Entgegenhaltungen:
- DE-A1- 10 332 115
- DE-C- 583 422
- DE-U1-202005 001 986
- FR-A1- 2 614 657
- GB-A- 2 213 369
- US-A1- 2005 151 040

## Beschreibung

Die Erfindung betrifft eine Halterung, die einen Halter zum Befestigen eines elektronischen Gerätes, insbesondere einer Kamera aufweist, wobei der Halter eine Geräteaufnahme aufweist, die einen Schlitz zwischen zwei Wänden aufweist, die jeweils eine Bohrung aufweisen, in der eine Drehvorrichtung geführt ist, die die Wände des Schlitzes miteinander verbindet.

Halterungen zum Befestigen von elektrischen Geräten, insbesondere von Kameras wie beispielsweise Action-Kameras sind aus dem Stand der Technik zahlreich bekannt. Diese erlauben beispielsweise mit unterschiedlich langen verstellbaren Silikonbändern die Befestigung einer Plastik-Halterung an einem Helm, einem Fahrradlenker, einem Außenspiegel oder einem Segelmast.

Eine gattungsgemäße Halterung ist aus der DE 20 2005 001 986 U1 bekannt.

Aufgabe der vorliegenden Erfindung ist es, solche aus dem Stand der Technik bekannten Vorrichtungen zu verbessern.

Diese Aufgabe wird nach einem ersten Aspekt der Erfindung durch eine Halterung zum Befestigen eines elektrischen Geräts, insbesondere einer Kameramit den Merkmalen des Patentanspruchs 1 gelöst.

Eine derartige Halterung ist aus der DE 103 32 115 A1 bekannt. Diese Halterung hat den Nachteil, dass für verschiedene Rohrdurchmesser, an denen die Halterung angebracht werden soll, unterschiedliche Halterungen zur Verfügung gestellt werden müssen. Außerdem ist die Anlagefläche der Halterung an einem Rohr vom Rohrdurchmesser abhängig, so dass die Haftkraft bei steigendem Rohdurchmesser sinkt.

Ähnliche Probleme entstehen beim Anbringen einer Halterung, wie sie aus der GB 2 213 369 A bekannt ist, wenn sie an Rohren mit unterschiedlichen Durchmessern befestigt wird.

Auch andere Gegenstände können mit der Halterung befestigt werden wie beispielsweise ein Lampe oder eine Messeinrichtung. Auch eine Befestigung einer mechanischen Vorrichtung ist möglich. Unter einer Stange ist dabei eine stangenförmige Vorrichtung zu verstehen, wie beispielsweise eben eine Verstrebung eines Helms, ein Fahrradlenker, ein Sattelrohr, ein Stativbestandteil oder ein Segelmast. Unter einer Flexscharnierung ist eine Scharnierung zu verstehen, die unterschiedliche Abstände zwischen den beiden Schellenelementen überbrücken kann. So ist es möglich, die Halterung an Stangen unterschiedlichen Durchmessers anzubringen. So liegt der Durchmesser eines Sattelrohrs beispielsweise in der Größenordnung von 25mm, der eines Segelmastes mit einer Größenordnung von 60mm oder mehr. An diese kann die Halterung mittels der Flexscharnierung angepasst werden. So wird eine hohe Variabilität der Halterung gewährleistet.

Von Vorteil ist, wenn die Flexscharnierung ein Verbindungsglied aufweist und dieses mit den Schellenelementen so verbunden ist, dass es austauschbar ist. Ein solches austauschbares Verbindungsglied ist eine Möglichkeit, eine Flexscharnierung auszubilden. Werden in einem Set mit einer Halterung mehrere Verbindungsglieder mitgeliefert, so kann der Scharnierabstand durch Austausch des Verbindungsgliedes verändert werden. Insbesondere kann ein Teil eines Schellenelementkörpers entfernt werden, sodass die Lagerung des Verbindungsglieds im Schellenelement freigelegt wird. Das Verbindungsglied kann dann ausgetauscht werden und der Schellenelementkörper wieder verschlossen werden. Dies kann beispielsweise durch eine Befestigung mit einer Schraube erfolgen.

Auf einer der Scharnierung gegenüberliegenden Seite, an einem ersten Schellenelement, kann die Halterung eine Spindelstange mit einem Verschlusshebel und an einem zweiten Schellenelement eine Gabel aufweisen, wobei die Spindelstange mit dem Verschlusshebel im geschlossenen Zustand der Halterung formschlüssig in die Gabel eingreift.

Durch die Spindelstange ist auch auf der der Scharnierung gegenüber liegenden Seite eine Längenverstellbarkeit gewährleistet. So ist sichergestellt, dass auch hier eine Anpassung der Halterung an unterschiedliche Durchmesser einer stangenförmigen Vorrichtung möglich ist. Auch andere Verschlussmechanismen auf der der Scharnierung gegenüberliegenden Seite, die eine Längenverstellbarkeit gewährleisten, sind denkbar, so eine Zahnstange, ein Seil oder eine Gewindestange.

Zur Erleichterung des Verschließens kann zwischen dem Schellenelement und dem Verschlusshebel ein Plastikelement angeordnet sein, um die Reibung der beiden Oberflächen aus identischem Material zu reduzieren.

Vorteilhafterweise ist auf der Innenseite eines Schellenelements ein Dämpfelement angeordnet. So kann eine Dämpfung gegenüber Erschütterungen der Stange erfolgen.

Vorteilhafterweise ist das Dämpfelement austauschbar befestigt. So ist es möglich, das Dämpfelement an Belastungssituationen anzupassen.

Die Halterung kann einen Halter für ein elektronisches Gerät aufweisen. Hierbei kann es sich insbesondere um einen Kamerahalter handeln. Dies kann an einem der Schellenelemente befestigt sein. Unter einem Halter für ein elektrisches Gerät ist dabei jede Vorrichtung zu verstehen, die dazu geeignet ist ein solches Gerät an der Halterung zu befestigen.

Zudem kann die Halterung auch Halter für andere Vorrichtungen aufweisen. Auch eine Aufnahmebohrung in der ein Gerät beziehungsweise weitere Gegenstände befestigt werden können ist vorteilhaft.

Insbesondere kann das Schellenelement eine Kugelpfanne aufweisen, in die der Halter für ein elektronisches Gerät mit einem Kugelkopf eingreift.

Vorteilhafterweise wirkt eine Fixierungselement auf den Kugelkopf in der Kugelpfanne ein. Unter einem Fixierungselement ist dabei jede Vorrichtung zu verstehen, die den Kugelkopf in einer bestimmten Position fixiert. Hierbei kann es sich beispielsweise um eine Schraube, einen Spannhebel oder eine Drehvorrichtung handeln, die auf den Kugelkopf in der Kugelpfanne einwirken.

Vorteilhafterweise sind in der Kugelpfanne Schwenkaussparungen vorgesehen. So kann in bestimmten Richtungen die Halterung in extreme Winkel verschwenkt werden. Die Schwenkaussparungen können beispielsweise im 90° Winkel angeordnet sein. Hierdurch werden die wesentlichen Raumrichtungen gut abgedeckt.

Ein Aspekt der Erfindung ist, dass der Halter eine Geräteaufnahme aufweist, wobei die Geräteaufnahme einen Schlitz aufweist und eine Wand des Schlitzes an einer dem Schlitz abgewandten Seite der Wand eine Kerbe aufweist. In eine solche Geräteaufnahme kann eine am elektrischen Gerät angebrachte Befestigungsvorrichtung eingeführt werden und in dem Schlitz befestigt werden. Von Vorteil ist, wenn die Geräteaufnahme mehrere Schlitze aufweist. Diese können entsprechend mit mehreren plattenförmigen Elementen an einer Gerätebefestigungsvorrichtung wechselwirken. Mehrere Schlitze erhöhen dabei die Stabilität der Interaktion. Die Befestigungsvorrichtung an dem Gerät kann dabei plattenförmig so ausgestaltet sein, dass eine Platte form- und/oder kraftschlüssig in den Schlitz eingreift. Sowohl die Wände des Schlitzes als auch die Befestigungsvorrichtung an der Kamera können beispielsweise eine Bohrung aufweisen. Durch diese kann eine Drehvorrichtung geführt werden, diese verbindet die Wände des Schlitzes miteinander und kann so ausgestaltet sein, dass sie diese gegen die Befestigungseinrichtung des elektronischen Gerätes zieht. Die an der Außenseite einer Wand vorgesehene Kerbe hat dabei den Vorteil, dass diese Wand leichter verformbar ist und daher besser an der Befestigungsvorrichtung des elektrischen Geräts anliegen wird. Auch mehrere Kerben sowohl an allen Wänden insbesondere den äußeren Wänden der Geräteaufnahme als auch mehrere Schlitze an einer Wand des Schlitzes können dabei vorteilhaft sein. Von Vorteil ist, wenn die Kerbe am unteren Ende der Wand auf der Höhe des unteren Endes des Schlitzes angeordnet ist.

Einzelne Elemente oder alle Elemente der Halterung können aus Aluminium sein. Dieses hochwertige Material zeigt wenig Verschleiß und ist im Vergleich zu dem Stand der Technik, wie beispielsweise Plastik, sehr stabil. Dies ist insbesondere im Extremsportbereich von Vorteil.

Ein weiterer Aspekt der Erfindung betrifft ein Set mit einer Halterung, wobei es eine Halterung und Verbindungsglieder unterschiedlicher Länge aufweist. So können beispielsweise ein kürzeres, ein mittleres und ein langes Verbindungsglied vorgesehen sein, um unterschiedliche Stangendurchmesser zu erfassen.

Ein letzter Aspekt der Erfindung betrifft ein Set mit einer Halterung und Dämpfelementen mit unterschiedlichen Dämpfungsgraden. Durch unterschiedliche Dämpfungsgrade ist es möglich, das Set an unterschiedliche Einsatzbedingungen anzupassen. So schwankt die Erschütterungsqualität, die beispielsweise beim Mountainbiken anfällt, stark und unterscheidet sich wesentlich von einer beispielsweise beim Segeln anfallenden Belastung.

Vorteilhafterweise sind die Dämpfelemente verschiedenfarblich markiert, um eine leichtere Erkennbarkeit der unterschiedlichen Dämpfungsgrade zu gewährleisten. Insbesondere können die Dämpfelemente durchgängig aus unterschiedlich farbigen Kunststoffen gefertigt sein.

Die Erfindung wird nachfolgend anhand von Ausführungsbeispielen unter Bezugnahme auf die Zeichnung näher erläutert.

Hierin zeigen:
- Figur 1: eine dreidimensionale Darstellung einer Halterung mit einem Halter für ein elektronisches Gerät, wobei dieser durch eine Drehvorrichtung fixiert wird,
- Figur 2: eine Seitenansicht einer Halterung mit einem Halter für ein elektronisches Gerät, wobei dieser durch eine Drehvorrichtung fixiert wird,
- Figur 3: einen Schnitt durch eine Halterung mit einem Halter für ein elektronisches Gerät, wobei dieser durch eine Drehvorrichtung fixiert wird,
- Figur 4: eine dreidimensionale Darstellung einer Halterung mit einem Halter für ein elektronisches Gerät, wobei dieser mit einem Spannhebel fixiert wird,
- Figur 5: eine Seitenansicht einer Halterung mit einem Halter für ein elektronisches Gerät, wobei dieser mit einem Spannhebel fixiert wird,
- Figur 6: einen Querschnitt durch eine Halterung mit einem Halter für ein elektronisches Gerät, wobei dieser mit einem Spannhebel fixiert wird und
- Figur 7: eine Explosionszeichnung einer Halterung mit einem Halter für ein elektronisches Gerät, wobei dieser durch eine Drehvorrichtung fixiert wird.

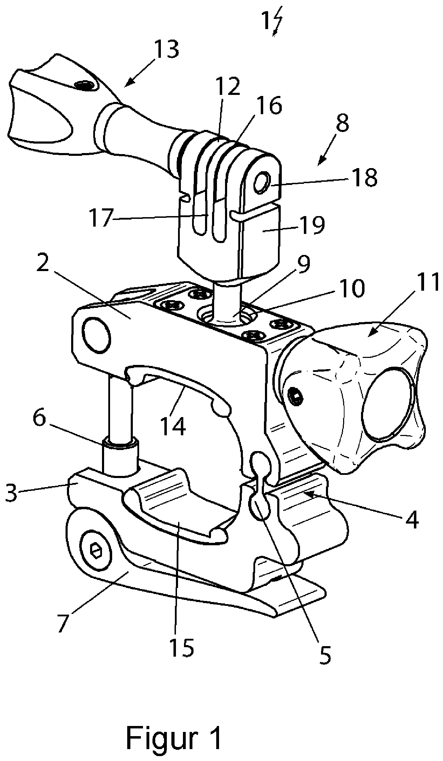

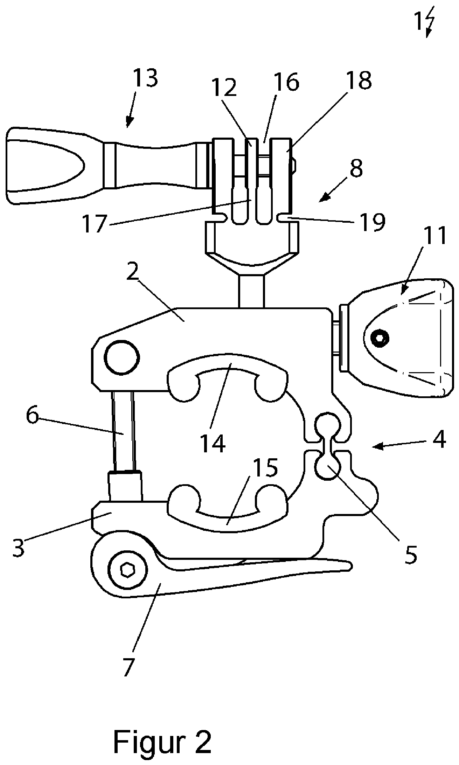

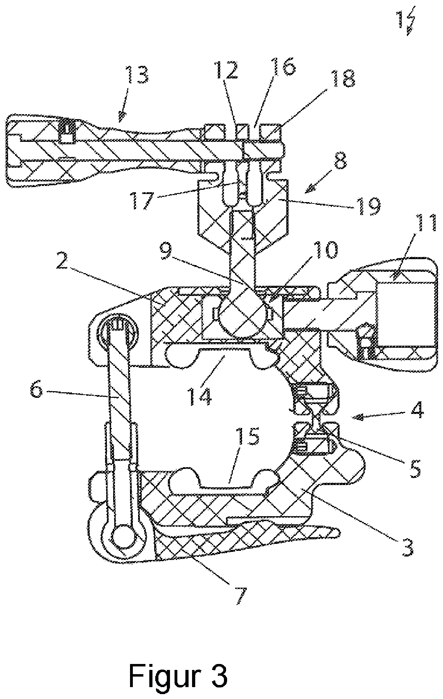

Die Halterung 1 in den Figuren 1 bis 3 weist zwei Schellenelemente 2 und 3 auf, die über eine Flexscharnierung 4 verbunden sind. Diese Flexscharnierung 4 ermöglicht es, den Abstand zwischen den beiden Schellenelementen 2 und 3 zu verändern und so die Halterung 1 an unterschiedliche Durchmesser des Objektes, an dem sie befestigt wird, anzupassen. Dabei weist die Flexscharnierung 4 ein Verbindungsglied 5 auf. Dieses Verbindungsglied 5 ist mit den Schellenelementen so verbunden, dass es austauschbar ist. Auf der der Flexscharnierung gegenüberliegenden Seite ist eine Justierspindel 6 vorgesehen, die das obere Schellenelement 2 mit dem unteren Schellenelement 3 verbindet. Die Justierspindel wird mittels eines Verschlusshebels 7 in ihrer Position fixiert. In dem oberen Schellenelement 2 ist ein Kamerahalter 8 angeordnet. Dieser greift mit einem Kugelkopf 9 in eine Kugelaufnahme 10 ein. In dieser kann der Kugelkopf 9 durch eine Fixierung 11 des Kamerahalters 8 fixiert werden. Vorliegend ist diese Fixierung 11 eine Drehvorrichtung. Die Kamera selbst (nicht abgebildet) wird mittels einer Kameraaufnahme 12 am Kamerahalter 8 befestigt. Hierfür kann eine Drehvorrichtung 13 aus der Kameraaufnahme bewegt werden. Eine Kamera (nicht abgebildet) mit geeigneter Vorrichtung (nicht abgebildet) kann in diese eingesetzt werden und dann diese geschlossen werden. Die Kameraaufnahme weist dabei zwei Schlitze wie den Schlitz 16 auf. Dieser ist durch zwei Wände 17 und 18 begrenzt. Diese werden durch die Drehvorrichtung 13 verbunden und gegeneinander gezogen. Um dies zu erleichtern weist die Wand 18 auf der Höhe des unteren Endes des Schlitzes eine Einkerbung 19 auf. Durch diese wird die Wand 18 flexibler und kann somit besser gegen eine in den Schlitz eingreifende Befestigungsvorrichtung einer Kamera (nicht abgebildet) gezogen werden. Auswechselbare Dämpfelemente 14, 15 bieten eine ausreichende Dämpfung zwischen Halterung 1 und einem Objekt (nicht abgebildet) an welchem diese befestigt wird.

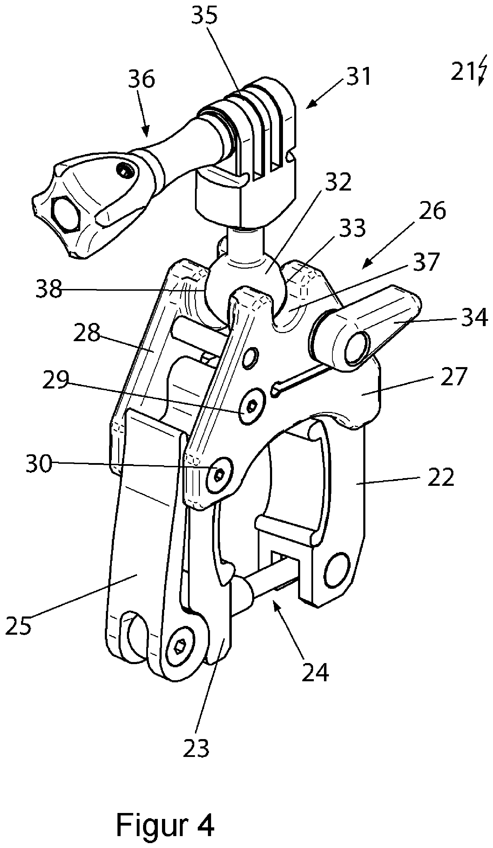

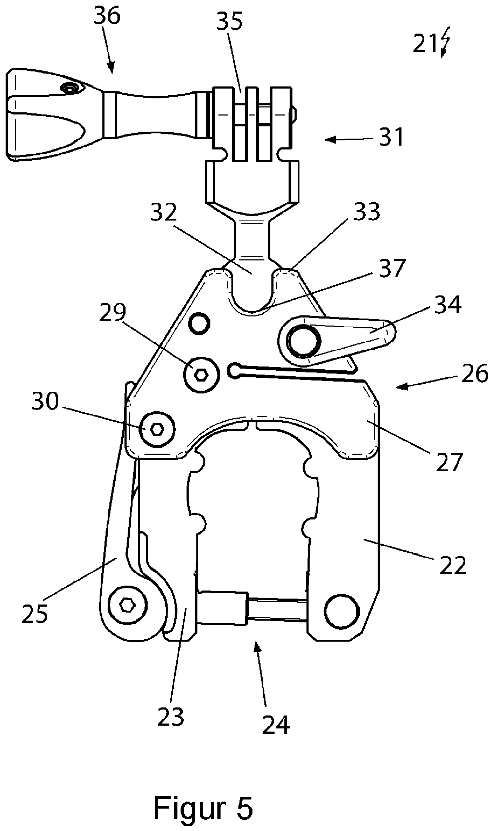

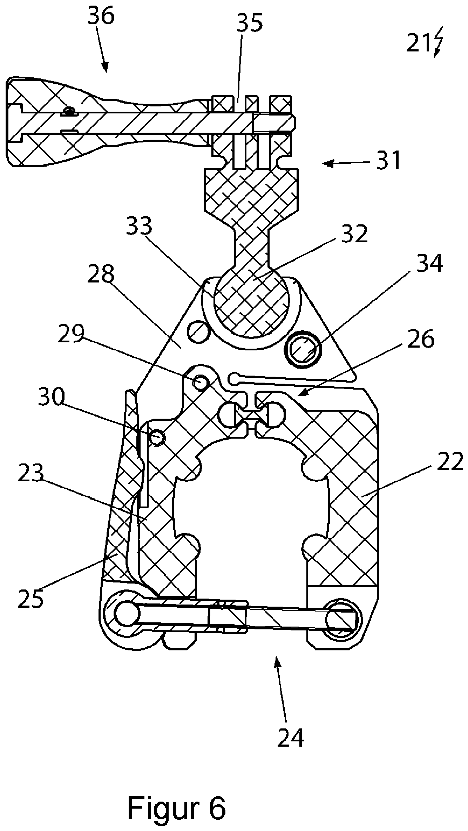

Bei einer Halterung 21 wie in den Figuren 4 bis 6 dargestellt werden beide Schellenelemente 22 und 23 erneut einseitig über eine Fixierspindel 24 verbunden, die durch einen Verschlusshebel 25 fixierbar ist. Auf der gegenüberliegenden Seite befindet sich eine Flexscharnierung 26. Diese ist zwischen zwei Halte- und Fixierplatten 27 und 28 angeordnet, wovon die Befestigungsplatte 27 mittels der Befestigungsschrauben 29 und 30 entfernt werden kann. So kann das Verbindungsglied ausgetauscht werden. Auch diese Halterung 21 weist einen Kamerahalter 31 auf. Dieser greift mit einen Kugelkopf 32 in eine Kugelpfanne 33 ein. Eine Befestigung des Kugelkopfes 32 in der Kugelpfanne 33 erfolgt hier durch einen Spannhebel 34. Auch hier kann die Kamera in die Kameraaufnahme 35 eingesetzt werden, indem die Fixierung 36 aus der Kameraaufnahme hinausbewegt wird. Die Kugelpfanne 33 weißt Schwenkaussparungen wie beispielsweise die Schwenkaussparungen 37, 38 auf, sodass der Kamerahalter 31 bis zu 90° verschwenkt werden kann.

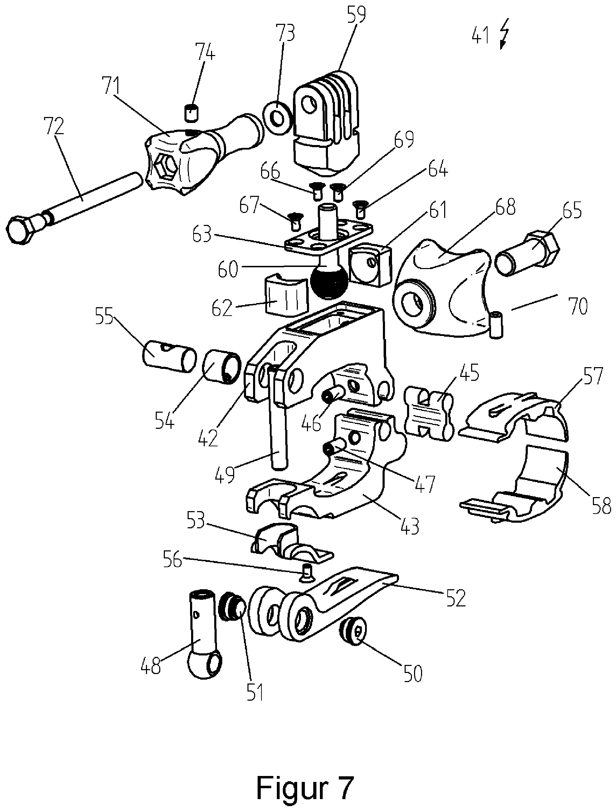

Die Halterung 41 in Figur 7 weist zwei Schellenelemente 42 und 43 auf, die über eine Flexscharnierung verbunden werden können. Diese Flexscharnierung besteht aus dem Verbindungsglied 45, das durch zwei Befestigungsschraubenelemente 46, 47 in den Schellenelementen 42, 43 gehalten wird. Durch Herausdrehen dieser Befestigungsschraubenelemente 46, 47 kann das Verbindungsglied 45 aus den Schellenelementen 42,43 hinausgeschoben werden und durch ein anderes Verbindungsglied (nicht abgebildet) ersetzt werden. Die auf der der Flexscharnierung gegenüberliegenden Seite vorgesehene Justierspindel setzt sich aus einem Spindelgewinde 48 und einer Spindelschraube 49 zusammen, die über Gelenkbestandteile 50 und 51 mit einem Verschlusshebel 52 verbunden sind. Zwischen dem Schellenelement 43 und dem Verschlusshebel 52 ist ein Plastikelement 53 angeordnet, das sicherstellt, dass der Verschlusshebel 52 durch eine Verminderung der Reibung leicht gegen das Schellenelement 43, in welchem die Justierspindel in eine Gabel eingreift, geschlossen werden kann. Dieses Plastikelement 53 ist mittels einer Schraube 46 mit dem Schellenelement 43 verbunden. Auf der Seite des Schellenelementes 42 greift das Schraubenelement 49 in Verschlusselemente 54, 55 ein. Auf der Innenseite der Schellenelemente 42 und 43 sind Dämpfelemente 57, 58 angeordnet. Diese sind austauschbar ausgestaltet und können durch ihre Formgebung in die Schellenelemente 42, 43 eingesetzt werden und halten in diesen form- und kraftschlüssig. Durch unterschiedliche Dämpfungsgrade verschiedener Dämpfelemente 57, 58 kann eine angepasste Dämpfung zwischen der Halterung 41 und einem Objekt, an welchem diese befestigt wird (nicht abgebildet), gewährleistet werden. Ein Kamerahalteelement 59 wird mittels eines Gewindes einer Kugelkopfstange 60 verbunden. Diese Kugelkopfstange mit dem Gewinde einerseits und einem Kugelkopf andererseits wird durch zwei Kugelaufnahmeelemente 61, 62 umschlossen, welche mittels einer Deckplatte 63 in einer Aussparung im oberen Schellenelement 42 gehalten werden. Die Deckplatte 63 wird durch die Schrauben 64, 65, 66 und 67 am Schellenelement 42 befestigt. Als Fixierungseinrichtung dient eine Drehvorrichtung mit einem Drehknopf 68 und einer in diesem versenkten Schraube 69, die mittels einem Schraubenelement 70 im Drehknauf befestigt ist. Eine Kamera wird in eine Kameraaufnahme 59 eingesetzt, indem die Drehvorrichtung 71 entsprechend herausgedreht wird. Dies erfolgt über das Schraubenelement 72, auf welchem die Beilagenscheibe 73 zwischen der Drehvorrichtung 71 und der Kameraaufnahme 59 angeordnet ist. Diese wird in der Drehvorrichtung 71 durch das Schraubenelement 74 gehalten.

## Patentansprüche

1. Halterung (1), die einen Halter (8) zum Befestigen eines elektronischen Gerätes, insbesondere einer Kamera aufweist, wobei der Halter (8) eine Geräteaufnahme (12) aufweist, die einen Schlitz (16) zwischen zwei Wänden aufweist, **dadurch gekennzeichnet, dass** die zwei Wände jeweils eine Bohrung aufweisen, in der eine Drehvorrichtung geführt ist, die die Wände des Schlitzes miteinander verbindet, wobei eine Wand (18) des Schlitzes (16) an einer dem Schlitz (16) abgewandten Seite der Wand (18) eine Kerbe (19) aufweist.

2. Halterung nach Anspruch 1, ***dadurch gekennzeichnet, dass*** die Geräteaufnahme (12) mehrere Schlitze (16) aufweist.

3. Halterung nach Anspruch 2, ***dadurch gekennzeichnet, dass*** die Schlitze (16) mit mehreren plattenförmigen Elementen der Geräteaufnahme wechselwirken.

4. Halterung nach Anspruch 2 oder 3, ***dadurch gekennzeichnet, dass*** an den äußeren Wänden (18) der Geräteaufnahme (12) Kerben (19) vorgesehen sind.

5. Halterung nach einem der vorhergehenden Ansprüche, ***dadurch gekennzeichnet, dass*** die Kerbe (19) am unteren Ende der Wand (18) auf der Höhe des unteren Endes des Schlitzes (16) angeordnet ist.

6. Halterung nach einem der vorhergehenden Ansprüche, ***dadurch gekennzeichnet, dass*** die Kerbe (19) sich quer zum Schlitz (16) erstreckt.

7. Halterung nach einem der vorhergehenden Ansprüche, ***dadurch gekennzeichnet, dass*** sie eine Rohrschelle mit zwei Schellenelementen (2, 3) aufweist, die mit einer Flexscharnierung (4) verbunden sind, die ein Verbindungsglied (5) aufweist, wobei auf der der Flexscharnierung (4) gegenüber liegenden Seite eine Justierspindel (6) vorgesehen ist, die die Schellenelemente (2, 3) miteinander verbindet.

8. Halterung nach Anspruch 7, ***dadurch gekennzeichnet, dass*** das Verbindungsglied (5)mit den Schellenelementen (2, 3) so verbunden ist, dass es austauschbar ist.

9. Halterung nach Anspruch 7 oder 8, ***dadurch gekennzeichnet, dass*** die Halterung (1) auf einer der Scharnierung (4) gegenüberliegenden Seite, an einem ersten Schellenelement (42) eine Spindelstange (49) mit einem Verschlusshebel (52) und an einem zweiten Schellenelement (43) eine Gabel aufweist, wobei die Spindelstange (49) in geschlossenem Zustand der Halterung formschlüssig in die Gabel eingreift.

10. Halterung nach einem der vorhergehenden Ansprüche, ***dadurch gekennzeichnet, dass*** ein Schellenelement (2, 3) der Halterung eine Kugelpfanne (10) aufweist, in die der Halter mit einem Kugelkopf (9) eingreift wobei ein Fixierungselement (11) auf den Kugelkopf (9) in der Kugelpfanne (10) einwirkt.

11. Halterung nach Anspruch 10, ***dadurch gekennzeichnet, dass*** in der Kugelpfanne (10) Schwenkaussparungen (37, 38) vorgesehen sind, die im 90°-Winkel angeordnet sind.

12. Halterung nach einem der vorhergehenden Ansprüche, ***dadurch gekennzeichnet, dass*** einzelne Elemente oder alle Elemente der Halterung aus Aluminium bestehen.

13. Set mit einer Halterung, nach einem der Ansprüche 7-12, ***dadurch gekennzeichnet, dass*** es eine Halterung und Verbindungsglieder (5) unterschiedlicher Länge aufweist.

14. Set nach Anspruch 13, ***dadurch gekennzeichnet, dass*** es eine Halterung und Dämpfelemente (14, 15) unterschiedlicher Dämpfungsgrade aufweist.

15. Set nach Anspruch 14, ***dadurch gekennzeichnet, dass*** die Dämpfelemente (14, 15) verschieden farblich markiert sind.

## Claims

1. Mount (1), which has a holder (8) for attaching an electronic device, and in particular a camera, wherein the holder (8) has a device receptacle (12), which has a slot (16) between two walls, ***characterized in that*** the two walls each have a through hole in which a rotation device is guided, which connects the walls of the slot to one another, wherein a wall (18) of the slot (16) has a notch (19) on a side of the wall (18) facing away from the slot (16).

2. Mount according to Claim 1, ***characterized in that*** the device receptacle (12) has a plurality of slots (16).

3. Mount according to Claim 2, ***characterized in that*** the slots (16) interact with a plurality of plate-shaped elements of the device receptacle.

4. Mount according to Claim 2 or 3, ***characterized in that*** notches (19) are provided on the outer walls (18) of the device receptacle (12).

5. Mount according to of any one of the previous claims, ***characterized in that*** the notch (19) is arranged at the lower end of the wall (18) at the height of the lower end of the slot (16).

6. Mount according to of any one of the previous claims, ***characterized in that*** the notch (19) extends perpendicular to the slot (16).

7. Mount according to of any one of the previous claims, ***characterized in that*** said mount has a pipe clamp with two clamp elements (2, 3), which are connected to a flexible hinge (4) that has a connecting link (5), wherein on the side opposite the flexible hinge (4) an adjustment spindle (6) is provided, which connects the clamp elements (2, 3) to one another.

8. Mount according to Claim 7, ***characterized in that*** the connecting link (5) is connected to the clamp elements (2, 3) in such a way that it can be replaced.

9. Mount according to Claim 7 or 8, ***characterized in that*** on a side located opposite the hinge (4), on a first clamp element (42) the mount (1) has a spindle rod (49) with a locking lever (52) and on a second clamp element (43) has a fork, wherein in the closed condition of the mount, the spindle rod (49) engages in the fork with a form fit.

10. Mount according to of any one of the previous claims, ***characterized in that*** one clamp element (2, 3) of the mount has a ball socket (10), in which the holder engages with a ball head (9), wherein a fixing element (11) acts upon the ball head (9) in the ball socket (10).

11. Mount according to Claim 10, ***characterized in that*** pivot recesses (37, 38) are provided in the ball socket (10), which are arranged at an angle of 90°.

12. Mount according to of any one of the previous claims, ***characterized in that*** individual elements or all elements of the mount are formed of aluminium.

13. Set having a mount according to any one of Claims 7-12, ***characterized in that*** said set has a mount and connecting links (5) of different length.

14. Set according to Claim 13, ***characterized in that*** said set has a mount and damping elements (14, 15) of different degrees of damping.

15. Set according to Claim 14, ***characterized in that*** the damping elements (14, 15) are marked in different colours.

## Revendications

1. Fixation (1) qui comporte un support (8) destiné à fixer un appareil électronique, notamment une caméra, le support (8) comportant un réceptacle d'appareil (12), qui comporte une encoche (16) entre deux parois, ***caractérisée en ce que*** les deux parois comportent chacune un perçage dans lequel est guidé un dispositif de rotation qui relie entre elles les parois de l'encoche, sur un côté de la paroi (18) qui est opposée à l'encoche (16), une paroi (18) de l'encoche (16) comportant une entaille (19).

2. Fixation selon la revendication 1, ***caractérisée en ce que*** le réceptacle d'appareil (12) comporte plusieurs encoches (16).

3. Fixation selon la revendication 2, ***caractérisée en ce que*** les encoches (16) sont en interaction avec plusieurs éléments en forme de plaques du réceptacle d'appareil.

4. Fixation selon la revendication 2 ou 3, ***caractérisée en ce que*** sur les parois (18) extérieures du réceptacle d'appareil (12) sont prévues des entailles (19).

5. Fixation selon l'une quelconque des revendications précédentes, ***caractérisée en ce que*** les entailles (19) sont placées sur l'extrémité inférieure de la paroi (18), à hauteur de l'extrémité inférieure de l'encoche (16).

6. Fixation selon l'une quelconque des revendications précédentes, ***caractérisée en ce que*** l'entaille (19) s'étend à la transversale de l'encoche (16).

7. Fixation selon l'une quelconque des revendications précédentes, ***caractérisée en ce qu***'elle comporte un collier de serrage avec deux éléments de collier (2, 3) qui sont reliés avec une charnière flexible (4) qui comporte un organe de liaison (5), sur le côté opposé à la charnière flexible (4), une broche d'ajustage étant prévue qui relie entre eux les éléments de collier (2, 3).

8. Fixation selon la revendication 7, ***caractérisée en ce que*** l'organe de liaison (5) est relié avec les éléments de collier (2, 3) de sorte à être interchangeable.

9. Fixation selon la revendication 7 ou 8, ***caractérisée en ce que*** sur un côté opposé à la charnière (4), la fixation (1) comporte sur un premier élément de collier (42) une tige de broche (49) avec un levier de fermeture (52) et sur un deuxième élément de collier (43) une fourche, lorsque la fixation est fermée, la tige de broche (49) s'engageant par complémentarité de forme dans la fourche.

10. Fixation selon l'une quelconque des revendications précédentes, ***caractérisée en ce* qu'**un élément de collier (2, 3) de la fixation comporte un coussinet sphérique (10) dans lequel le support s'engage par une tête sphérique (9), un élément de fixation (11) agissant sur la tête sphérique (9) dans le coussinet sphérique (10).

11. Fixation selon la revendication 10, ***caractérisée en ce que*** dans le coussinet sphérique (10) sont prévus des évidements de pivotement (37, 38), qui sont placés sous un angle de 90°.

12. Fixation selon l'une quelconque des revendications précédentes, ***caractérisée en ce que*** des éléments individuels ou tous les éléments de la fixation sont en aluminium.

13. Ensemble avec une fixation selon l'une quelconque des revendications 7 à 12, ***caractérisé en** ce **qu**'il* comporte une fixation et des organes de liaison (5) de différente longueur.

14. Ensemble selon la revendication 13, ***caractérisé en ce qu**'il* comporte une fixation et des éléments amortisseurs (14, 15) à différents taux d'amortissement.

15. Ensemble selon la revendication 14, ***caractérisé en ce que*** les éléments amortisseurs (14, 15) sont marqués de différentes couleurs.
